# EUROPEAN PATENT APPLICATION

(11) **EP 3 944 068 A2**
(43) Date of publication of application: **26.01.2022**
(21) Application number: 21203930.9
(22) Date of filing: 21.10.2021
(51) Int. Cl.: G06F 3/16

(54) **METHOD, APPARATUS AND SYSTEM FOR VOICE INTERACTION, VEHICLES AND STORAGE MEDIA**

(30) Priority: 09.07.2021 CN 202110774975
(71) Applicant: GUANGZHOU XIAOPENG MOTORS TECHNOLOGY CO., LTD., Guangzhou (CN)
(72) Inventor: BAO, Pengli, Guangzhou (CN); LIN, Bochuan, Guangzhou (CN)
(74) Representative: Treeby, Philip David William

(57) **Abstract**

A method of voice interaction is provided, which includes: in response to a change in a control property of a control in a graphical user interface corresponding to an operation on the control, updating a first voice interaction property corresponding to the control property based on the change to obtain a second voice interaction property; generating updated scene element information corresponding to the control based on the second voice interaction property; updating a voice user interface based on the scene element information to generate a scene segment in the updated voice user interface; and receiving a scene event to perform voice interaction. When a control property of a control in the graphical user interface is changed, the method make it possible that scene element information of a scene element in the voice user interface can be automatically generated based on the changed property, and voice interaction can be performed by generating a scene segment. An apparatus and system for voice interaction, vehicles and computer-readable storage media are also provided.

## Description

### Field of Invention

The present invention relates to the field of transportation, and in particular, to a method, apparatus and system for voice interaction, vehicles and computer-readable storage media.

### Background

With the development of intelligence in vehicles, users are more frequently interacting with applications on the vehicles. Compared with interaction where a user manually operates a graphical user interface (GUI), interaction using a voice user interface (VUI) improves driving safety. In voice interaction approaches, when a user operates on a control of a GUI page through voice interaction such that a property or properties of the control change, these changes must be updated in real time. At present, a service end generally needs to update the voice interaction scene while dealing with the change of the GUI page. This results in high labor and maintenance costs, and increases code intrusiveness while increasing the amount of coding required by the service.

### Summary of Invention

As such, implementations of the present invention provide a method, apparatus and system for voice interaction, vehicles and computer-readable storage media.

A method of voice interaction is provided, which includes:
in response to a change in a control property of a control in a graphical user interface corresponding to an operation on the control, updating a first voice interaction property corresponding to the control property based on the change to obtain a second voice interaction property;
generating updated scene element information corresponding to the control based on the second voice interaction property;
updating a voice user interface based on the scene element information to generate a scene segment in the updated voice user interface; and
receiving a scene event to perform voice interaction, the scene event generated based on a voice request and the scene segment.

The method of voice interaction further comprises, before responding to the change in the control property of the control in the graphical user interface corresponding to the operation on the control:
importing a previously created control update listener interface when the graphical user interface is in an initialization state;
acquiring a control list of the graphical user interface when the graphical user interface transitions from the initialization state to a display state, the control list including the control; and
adding the control update listener interface to the control.

Said adding the control update listener interface to the control comprises:
adding the control update listener interface to the control when the control is a voice interaction control.

Said adding the control update listener interface to the control further comprises:
adding the control update listener interface to the control when scene element information of a previously built scene corresponding to the control is valid.

The method of voice interaction further comprises, before responding to the change in the control property of the control in the graphical user interface corresponding to the operation on the control:
when the control includes a child control, obtaining the child control of the control; and
adding the control update listener interface to the child control.

Said generating updated scene element information corresponding to the control based on the second voice interaction property comprises:
performing a callback to a voice interaction update method of the control update listener interface when the control update listener interface is not null;
calling a scene element update interface in the voice interaction update method; and
acquiring the second voice interaction property via the scene element update interface and generating the updated scene element information based on the second voice interaction property.

Said acquiring the second voice interaction property via the scene element update interface and generating the updated scene element information based on the second voice interaction property comprises:
creating an update task class;
calling the scene element update interface in the update task class to obtain the second voice interaction property; and
generating the updated scene element information based on the second voice interaction property.

The method further comprises:
acquiring basic scene information for a scene of the graphical user interface based on the update, and
said updating a voice user interface based on the scene element information to generate a scene segment in the updated voice user interface comprises:
   updating the voice user interface based on the basic scene information and the scene element information to generate the scene segment that has been updated.

An apparatus for automatically updating a voice interaction scene is further provided, which comprises:
an update module configured to, when a voice request comprises an update request for updating a control property of a control in a graphical user interface, update a first voice interaction property corresponding to the control property based on the update request and according to a first predetermined policy to obtain a second voice interaction property;
a first generation module configured to generate updated scene element information based on the second voice interaction property;
a second generation module configured to generate an updated voice interaction scene based on the updated scene element information to update the voice interaction scene corresponding to the graphical user interface; and
a receiving module configured to receive a scene event and to perform voice interaction, the scene event generated based on the voice request and the voice interaction scene.

A system for voice interaction is further provided, which comprises a vehicle and a server, wherein
the vehicle is configured to, in response to a change in a control property of a control in a graphical user interface corresponding to an operation on the control, update a first voice interaction property corresponding to the control property based on the change to obtain a second voice interaction property; generate updated scene element information corresponding to the control based on the second voice interaction property; update a voice user interface based on the scene element information to generate a scene segment in the updated voice user interface; and
   receive a voice request and transmit the voice request to the server,
the server is configured to generate a scene event in response to the voice request and send the scene event to the vehicle,
the vehicle is further configured to receive a scene event and to perform voice interaction, the scene event generated based on a voice request and the scene segment.

The application further provides a vehicle comprising a memory and a processor, the memory having stored thereon a computer program which, when executed by the processor, implements the method of voice interaction in accordance with any of the embodiments described above.

The application further provides a non-transitory computer-readable storage medium having stored thereon a computer program which, when executed by one or more processors, implements the method of voice interaction in accordance with any of the embodiments described above.

In the invention, when a control property of a control in a graphical user interface is changed in response to an operation on the control, a first voice interaction property corresponding to the control property is updated based on the change to obtain a second voice interaction property. Updated scene element information corresponding to the control is generated based on the second voice interaction property. A voice user interface is updated based on the scene element information to generate a scene segment in the updated voice user interface. Voice interaction is performed when receiving a scene event generated based on a voice request and the scene segment. As such, when a control property of a control in the graphical user interface is changed, scene element information of a scene element in the voice user interface can be automatically generated based on the changed property, and voice interaction can be performed by generating a scene segment.

Additional aspects and advantages of embodiments of the present invention will be set forth in the description below, and will become apparent from the description, or can be understand by practice of the present invention.

### Brief Description of Drawings

The above and/or additional aspects and advantages of the present invention will become apparent and readily understood from the following description of the embodiments with reference to the following drawings, in which:
FIG. 1 is a flow chart of a method of voice interaction according to the present invention;
FIG. 2 is a block diagram of an apparatus for voice interaction according to the present invention;
FIG. 3 is a flow chart of a method of voice interaction according to the present invention;
FIG. 4 is a block diagram of an apparatus for voice interaction according to the present invention;
FIG. 5 is a flow chart of a method of voice interaction according to the present invention;
FIG. 6 shows an example for a method of voice interaction according to the present invention;
FIG. 7 is a flow chart of a method of voice interaction according to the present invention;
FIG. 8 is a flow chart of a method of voice interaction according to the present invention;
FIG. 9 is a flow chart of a method of voice interaction according to the present invention;
FIG. 10 is a flow chart of a method of voice interaction according to the present invention;
FIG. 11 is a flow chart of a method of voice interaction according to the present invention;
FIG. 12 is a block diagram of an apparatus for voice interaction according to the present invention;
FIGS. 13-a and 13-b shows an example for a method of voice interaction according to the present invention.

### Detailed Description

The embodiments of the present invention will now be described in detail, examples of which are illustrated in the accompanying drawings. Same or similar reference numerals indicate same or similar elements or elements having same or similar functions throughout. The embodiments described below by reference to the drawings are exemplary and are intended to be illustrative of embodiments of the present invention and are not to be construed as limiting the present invention.

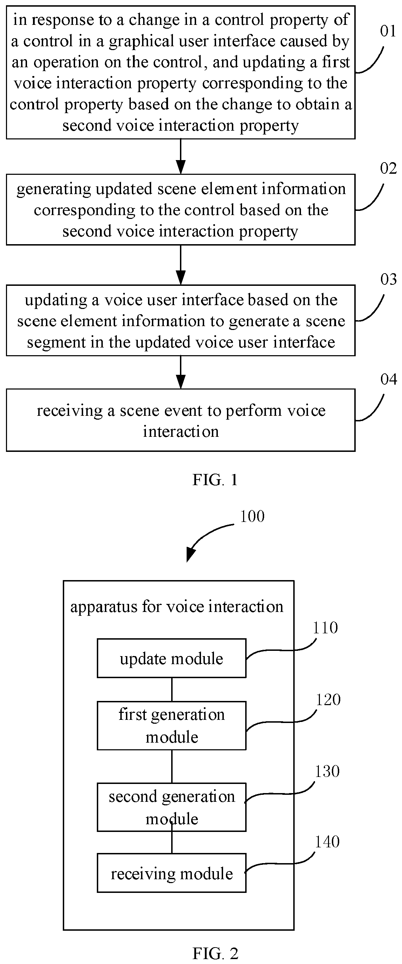

Referring to FIG. 1, a method of voice interaction is provided, which includes:
step 01, in response to a change in a control property of a control in a graphical user interface corresponding to an operation on the control, updating a first voice interaction property corresponding to the control property based on the change to obtain a second voice interaction property;
step 02, generating updated scene element information corresponding to the control based on the second voice interaction property;
step 03, updating a voice user interface based on the scene element information to generate a scene segment in the updated voice user interface; and
step 04, receiving a scene event to perform voice interaction, the scene event generated based on a voice request and the scene segment.

Accordingly, referring to FIG. 2, in accordance with the present invention, an apparatus for voice interaction 100 is further provided. The method of voice interaction in accordance with the embodiments of the present invention can be realized by the apparatus for voice interaction 100. The apparatus for voice interaction 100 includes an update module 110, a first generation module 120, a second generation module 130, and a receiving module 140. The step 01 can be performed by the update module 110, the step 02 can be performed by the first generation module 120, the step 03 can be performed by the second generation module 130, and the step 04 can be performed by the receiving module 140. In other words, the update module 110 is configured to, in response to a change in a control property of a control in a graphical user interface corresponding to an operation on the control, update a first voice interaction property corresponding to the control property based on the change to obtain a second voice interaction property. The first generation module 120 is configured to generate updated scene element information corresponding to the control based on the second voice interaction property. The second generation module 130 is configured to update a voice user interface based on the scene element information to generate a scene segment in the updated voice user interface. The receiving module 140 is configured to receive a scene event and to perform voice interaction.

In accordance with the present invention, a vehicle is further provided. The vehicle comprises a memory and a processor. The memory has a computer program stored thereon. The processor is configured to, in response to a change in a control property of a control in a graphical user interface corresponding to an operation on the control, update a first voice interaction property corresponding to the control property based on the change to obtain a second voice interaction property; generate updated scene element information corresponding to the control based on the second voice interaction property; update a voice user interface based on the scene element information to generate a scene segment in the updated voice user interface; and receive a scene event and to perform voice interaction.

In particular, the vehicle has a screen for displaying a graphical user interface and an automatic speech recognition device supporting voice interaction. The vehicle may include a land vehicle, a flying car, a high-speed train, and the like. Taking a land vehicle as an example, the vehicle includes a display area(s) and a processor. The display areas of the vehicle may include, among others, an instrument screen, an in-vehicle display area screen, and a head up display that can be implemented on the windshield of the vehicle. An in-vehicle system on the vehicle presents content to users through a Graphical User Interface (GUI). The display area includes a number of UI elements, and different display areas may present same or different UI elements. The UI elements may include card objects, application icons or interfaces, folder icons, multimedia file icons, controls operable for interaction, and the like.

The method of voice interaction include enabling voice interaction between a human and equipment through a Voice User Interface (VUI). The equipment may include a vehicle having a display device that displays GUIs.

The present invention is illustrated by way of examples as follows.

Specifically, at step 01, a control property of a control in a graphical user interface is changed in response to an operation on the control. An operation on a control in the graphical user interface include a hit for or selection of a control on a displayed GUI page by a user through a voice command. Changing a control property in response to the operation on the control in the graphical user interface includes selecting the control according to the user's voice command and changing any property of the control.

In an example, the graphical user interface is a Bluetooth setting page, and there is a control "Bluetooth switch" on the Bluetooth setting page. When the Bluetooth page is displayed, the user issues a voice command "turn on the Bluetooth" to operate the control "Bluetooth switch", which includes changing the switch property of the control "Bluetooth switch" from "OFF" to "ON".

Further, in response to the change in the control property, a first voice interaction property corresponding to the control property is updated based on the change to obtain a second voice interaction property.

In some embodiments, a UI control library for an application has been created in advance. The UI control library is an Android UI component library encapsulated depending on actual applications. The UI control library may include a public UI control library, and may also include a dedicated UI control library that is generated from the public UI control library for an actual application. The UI control library includes property settings of all controls in the GUI pages. In addition, the UI control library includes voice interaction controls (which may also be referred to as Vuiviews) that extend the controls based on the properties of the controls or control views, and includes voice interaction properties, i.e., VUI properties, that are extended by way of interface implementation. Thus, in response to a change in a control property, an application will call a relevant interface in the control or control view that needs to be changed to change the property. Taking the SetCheck interface method of the Bluetooth switch as an example, the property of the Bluetooth is switched from "OFF" to "ON" by means of the Set method. In addition, the UI control library updates the original first voice interaction property to the updated second voice interaction property in an interface corresponding to the Vuiview.

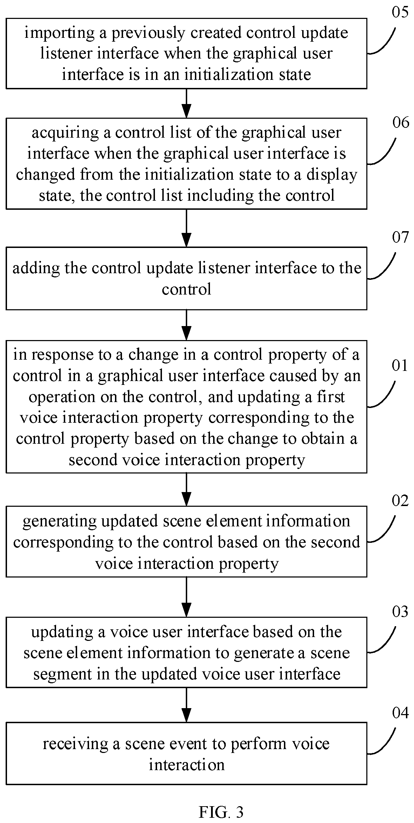

Preferably, referring to FIG. 3, The method of voice interaction further includes, before the step 01:
step 05, importing a previously created control update listener interface when the graphical user interface is in an initialization state;
step 06, acquiring a control list of the graphical user interface when the graphical user interface transitions from the initialization state to a display state, the control list including the control; and
step 07, adding the control update listener interface to the control.

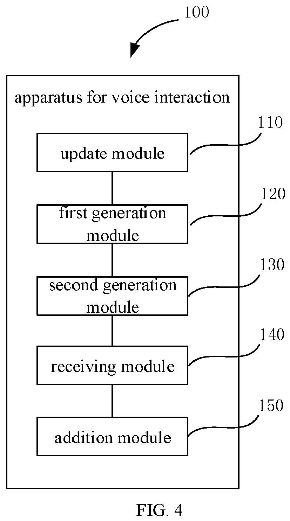

Referring to FIG. 4, The apparatus for voice interaction 100 further comprises an addition module 150. The steps 05-07 can be performed by the addition module 150. In other words, the addition module 150 is configured to import a previously created control update listener interface when the graphical user interface is in an initialization state; acquire a control list of the graphical user interface when the graphical user interface transitions from the initialization state to a display state; and add the control update listener interface to the control.

The processor is configured to import a previously created control update listener interface when the graphical user interface is in an initialization state; acquire a control list of the graphical user interface when the graphical user interface transitions from the initialization state to a display state; and add the control update listener interface to the control.

Specifically, before responding to the change event of the control property of the control in the GUI corresponding to the operation on the control, the control update listener interface is added to the control. The control update listener interface is configured to listen changes in properties of controls. Addition of the control update listener interface can be completed in VuiEngine SDK.

It should be noted that the present invention creates VuiEngine SDK in advance, and the addition of the interface is implemented in VuiEngine SDK.

In an example, a package VuiCommon can be created, in which the control update listener interface VuiViewChangedListener and an interface(s) IVuiView. Set/get methods of the voice interaction properties are defined in IVuiView. An association is established between the UI control library and VuiEngine SDK through the interface IVuiView, to avoid a huge service APP package due to VuiEngine SDK depending on the UI control library.

Specifically, an object instance may be generated for the previously created control update listener interface when an application is initialized or a GUI page of the application is initialized. Initialization of a page includes an application entering this page when a process just starts. Moreover, a scene can be registered when the page is initialized. That is, basic information of the page such as scene ID and Vuiview information can be registered and stored. The control update listener interface is imported when registering the scene.

In an example, a navigation APP includes the previously created control update listener interface VuiViewChangedListener. The navigation homepage is entered at the start of the navigation APP, at which point an object instance of VuiViewChangedListener is generated. At the same time, a scene is registered for this page, and an object of VuiViewChangedListener is passed in while registering the scene.

Further, at step 06, the state of a graphical user interface switching from initialization to display refers to that the GUI page is previously in the initialization state and is transitioned to be visible, the GUI page is switched from the previous initialization state to a state where the GUI page is in the foreground and the user's manual click and other interactions can be accepted. In some embodiments, a GUI page has life cycle management. When the page is initialized, State=init. When the page is visible, State=active. That is, when the State changes from init to active, the graphical user interface transitions from the initialization state to the display state.

When the graphical user interface transitions from the initialization state to the display state, the control list of the graphical user interface can be acquired. The control list includes the controls. It should be appreciated that each GUI in the application has a control list including a plurality of controls. The UI controls and properties of the UI control views can be obtained from the UI control library. There are multiple controls or control views in a GUI of each page. The controls are commonly known GUI controls, such as a directory control, Text, Edit, UpDown, Picture, Button, Checkbox, and other controls.

Every control in the control list is traversed, and the imported control update listener interface VuiViewChangedListener is added to the control.

It should be noted that there is no need to add VuiViewChangedListener to the control when changing from the other state to the visible state. For example, when the previous state was State = active then changed to State = inactive and then changed to State = active, there is no need to add VuiViewChangedListener again because it has already been added when the page is switched from init to active previously.

It should be noted that, in some embodiments, when the graphical user interface changes from the initialization state to the display state, a voice interaction scene for the page is built. After the build of the voice interaction scene is completed, a user can perform voice interaction with the GUI page when the GUI page is displayed. The build of the scene will not be described herein, and the voice interaction in the present invention is on the basis that the scene build has been completed.

In this way, by pre-creating the control update listener interface and importing the interface in a special state and adding the interface to the control, the control update listener interface can be used to listen to property updates of controls. In the case of an update of a property of a control, the control update listener interface can perform a corresponding operation, such as causing a voice user interface (VUI) to perform a corresponding update by means of an update method.

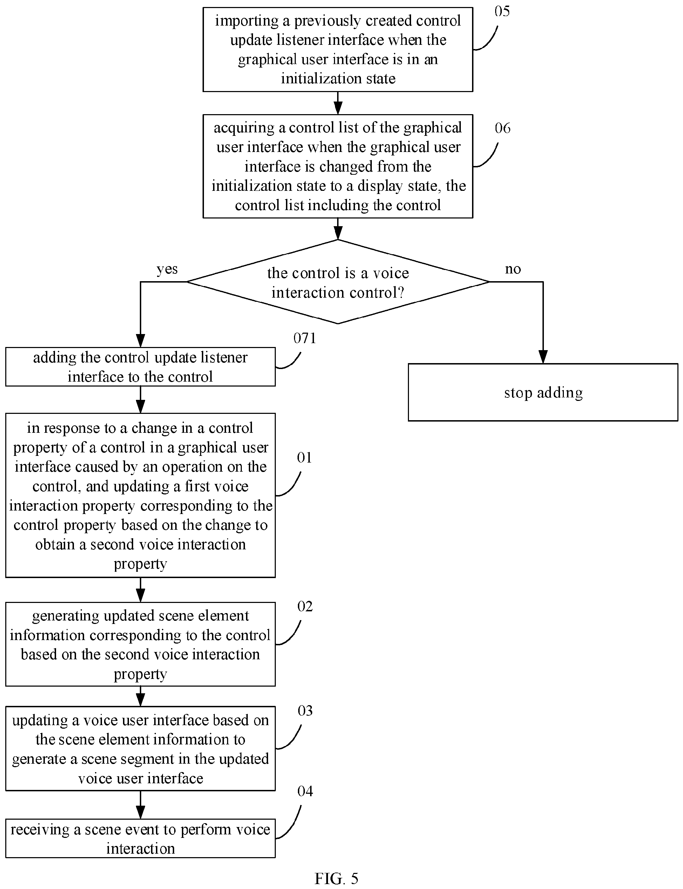

Preferably, referring to FIG. 5, The step 07 further includes:
step 071, adding the control update listener interface to the control when the control is a voice interaction control.

The step 071 can be implemented by the addition module 150. In other words, the addition module 150 is configured to add the control update listener interface to the control when the control is a voice interaction control.

The processor is configured to add the control update listener interface to the control when the control is a voice interaction control.

Specifically, after the control list of the GUI page is obtained, all the controls are traversed to perform a determination logic to determine whether a control is a voice interaction control Vuiview. Vuiview includes a control supporting voice interaction. Not all controls in a GUI page can be used to perform voice interaction. When a control requires voice interaction, a control update listener interface is added to the control. To determine whether the control can perform voice interaction, a determination may be made as to whether the current control is a voice interaction control Vuiview by querying whether it is extended. When the control is not a voice interaction control, the control update listener interface may not be added to the control.

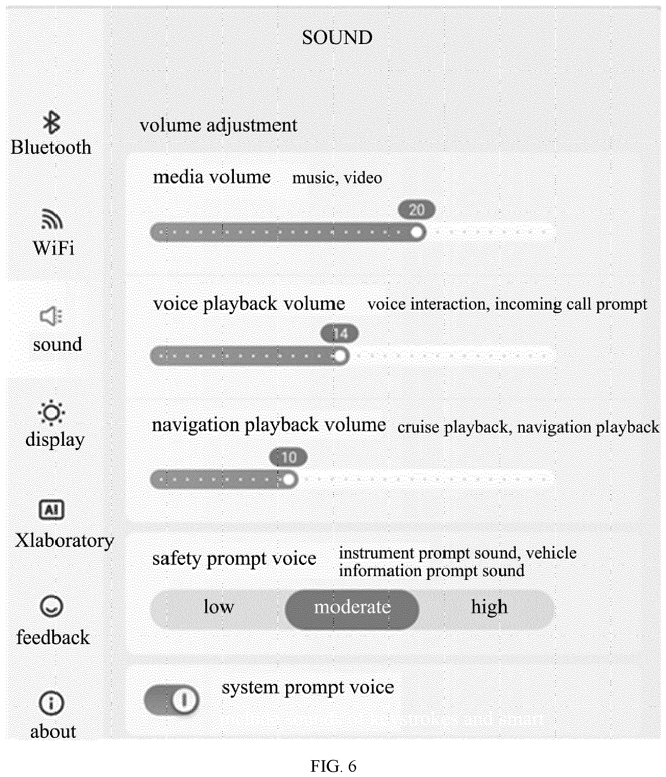

In an example, referring to FIG. 6 again, which show the "sound" GUI page. The text control "volume adjustment" is a prompt information control, not a voice interaction control. The multi-select button control for the "low", "moderate", and "high" options in the "security prompt volume" is a voice interaction control. For example, a user may operate the control to be set to "moderate" with a voice command of "set the security prompt volume to moderate".

In this way, addition of the control update listener interface to controls that do not require voice interaction can be avoided by such determination logic, effectively avoiding invalid additions and thus improving efficiency.

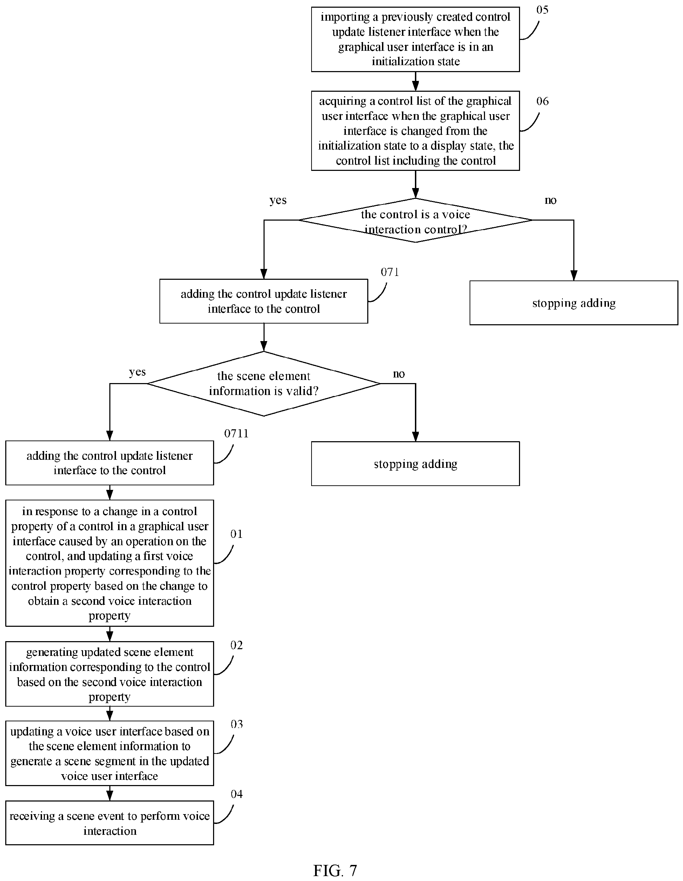

Preferably, referring to FIG. 7, The step 071 further includes:
step 0711, adding the control update listener interface to the control when scene element information of a previously built scene corresponding to the control is valid.

The step 0711 can be implemented by the addition module 150. In other words, the addition module 150 is configured to add the control update listener interface to the control when scene element information of a previously built scene corresponding to the control is valid.

The processor is configured to add the control update listener interface to the control when scene element information of a previously built scene corresponding to the control is valid.

Specifically, when a control is a voice interaction control, it may then be determined whether the previously built scene element information is valid. The previously built scene element information has a one-to-one correspondence with each control. Scene element information of a scene element VuiElement corresponding to a control can be generated based on the voice interaction properties in a previous VUI scene build. For example, VuiElement is generated from each voice interaction property and is added to the generated tree structure. The information of the voice interaction scene corresponding to the graphical user interface is formed at last.

In an example, VuiElement is generated for a voice interaction control "details" in a GUI page as follows:
"elements":[{
"elements":[{"id":"2131296983_0", "label":"details", "layoutLoadable":true,
"resourceName":"id/x_list_action_button_icon", "timestamp":1623830168531,
"type":"ImageButton"}],
"fatherLabel":"select a network","id":"2131296955_0","label":"the first|AI-Test",
"layoutLoadable":true,"resourceName":"id/wifi_item_two", "timestamp": 1623830168531,"type":
"Group"},{"actions": { "Click":{ "actType":"Select", "bizType":"Connect"}.

The scene element information corresponding to this control is generated when the VUI scene is built. It is necessary now to determine whether the previously generated scene element information is valid. A result can be obtained by querying the VUI scene information. The control update listener interface is added to the control if the scene element information is valid. The addition may not be performed if the scene element information is not valid.

It should be noted that the determination as to whether the control is a voice interaction control and the determination as to whether the scene element information is valid may be performed in any order. The ordering of the two determination logics in this embodiment are only illustrative. In some embodiments, it is also possible to first determine whether scene element information is valid. When the scene element information is invalid, no further determination is made and the interface addition is not performed. When the scene element information is valid, a determination as to whether the control is a voice interaction control is then made. When the control is a voice interaction control, the control update listener interface is added to the control. When the control is not a voice interaction control, the control update listener interface may not be added to the control.

In this way, addition of the control update listener interface to controls corresponding to invalid scene element information can be avoided by such determination logic, effectively avoiding invalid additions and thus improving efficiency.

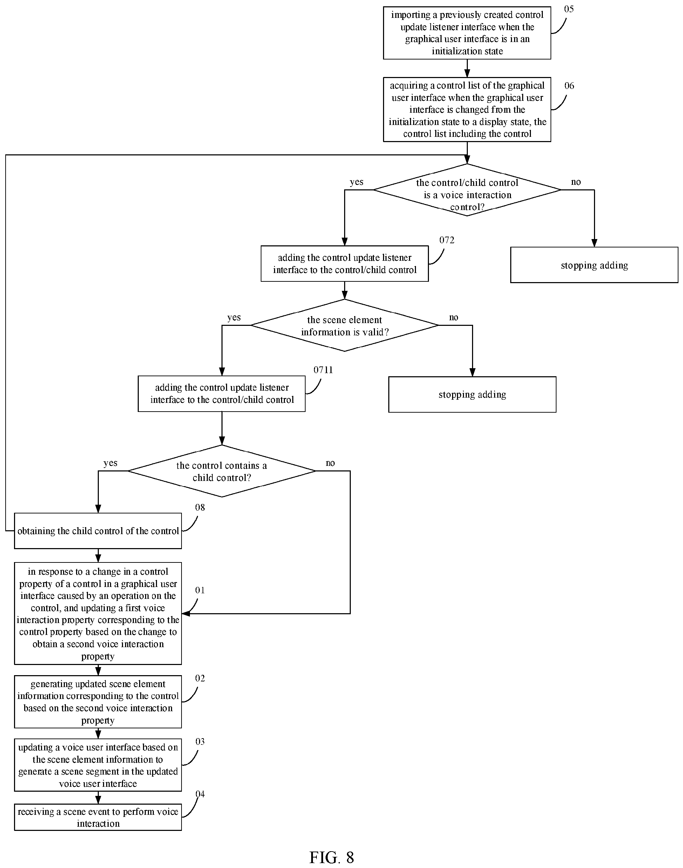

Preferably, referring to FIG. 8, The method further includes before the step 01:
step 08, when the control includes a child control, obtaining the child control of the control; and
Accordingly, the step 07 further includes:
step 072, adding the control update listener interface to the child control.

The steps 08 and 072 can be implemented by the addition module 150. In other words, the addition module 150 is configured to when the control includes a child control, obtain the child control of the control; and add the control update listener interface to the child control.

The processor is configured to when the control includes a child control, obtain the child control of the control; and add the control update listener interface to the child control.

It may be appreciated that controls are in hierarchy and a control has a child control. For example, the "sound" GUI is provided with, among other, a volume control and a media volume control. The volume control is provided with an adjustment button including "high, moderate, and low" options. Thus, the "high, moderate, and low" controls are child controls of the adjustment button control.

After the control update listener interface is added to the control or control view, it is possible to proceed to determine whether the control contains a child control, i.e., a child view. If a child view is contained, information of the child view is traversed and the control update listener interface is added to the child control. If this control or control view does not contain a child view, when the addition to the current control is complete, the process proceeds to add the control update listener interface to the next control.

In some embodiments, if the control contains a child control, it is possible to further determine whether the child control is a voice interaction control and whether VUI scene element information corresponding to the child control is valid. When the child control is a voice interaction control and/or the VUI scene element information corresponding to the child control is valid, the control update listener interface is added to the child control.

In this way, in adding the control update listener interface, the child controls of the controls are traversed. This provides the graphical user interface with a parent-child relation in a 3D space to a certain extent, such that a resulting voice interaction scene has three-dimensional spatial information for voice manipulation. When a voice command specifies the control, the user's desired operation can be effectively identified, thereby improving user experience.

As described above, when there is a change in the control property, the first voice interaction property corresponding to the control property is updated based on the change to obtain a second voice interaction property. At this point, the control update listener interface in the control monitors the change in the voice interaction property. At step 02, the scene element information corresponding to the control is updated through a corresponding interface and update method to obtain the updated scene element information.

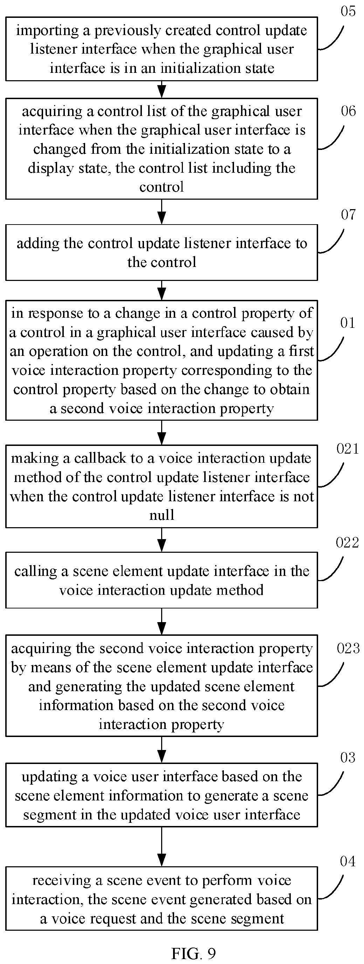

Preferably, referring to FIG. 9, The step 02 includes:
step 021, performing a callback to a voice interaction update method of the control update listener interface when the control update listener interface is not null;
step 022, calling a scene element update interface in the voice interaction update method; and
step 023, acquiring the second voice interaction property via the scene element update interface and generating the updated scene element information based on the second voice interaction property.

The steps 021-023 can be implemented by the first generation module 120. In other words, the first generation module 120 is configured to perform a callback to a voice interaction update method of the control update listener interface when the control update listener interface is not null; call a scene element update interface in the voice interaction update method; and acquire the second voice interaction property via the scene element update interface and generate the updated scene element information based on the second voice interaction property.

The processor is configured to perform a callback to a voice interaction update method of the control update listener interface when the control update listener interface is not null; call a scene element update interface in the voice interaction update method; and acquire the second voice interaction property via the scene element update interface and generate the updated scene element information based on the second voice interaction property.

As described above, the control update listener interface has been added to the control when the graphical user interface transitions from the initialization state to the display state. When a control property of a control in the GUI page changes, such as the property of Bluetooth switch transitions from "ON" to "OFF". It is possible to determine whether the control update listener interface is null or whether the control update listener interface has been added to the control. If the control update listener interface is null, indicating that no control update listener interface is added to the control, the update is stopped. If the control update listener interface is not null, a callback is performed to a voice interaction update method of the control update listener interface, and a scene element update interface is called in the voice interaction update method.

In an example, the user issues a voice command "turn on the Bluetooth". A respective natural language understanding module receives, recognizes and understands the command. The UI control library application package calls the "setCheck" interface in the UI control library by depending on the created VuiCommon to update the value of the property to "OFF". After the update of the property, it is determined that VuiViewChangedListener is not null, and then a callback to the voice interaction update method (such as updateVui) of a VuiViewChangedListener object instance of the control is performed.

Further, the application inputs scene information of the GUI page, such as the scene ID, control ID and other parameters, in the method by performing a callback to updateVui of VuiViewChangedListener, and then calls the scene element update interface in VuiEngine SDK to update the scene element information.

At step 023, the second voice interaction property is acquired via the scene element update interface, and the updated scene element information is generated based on the second voice interaction property.

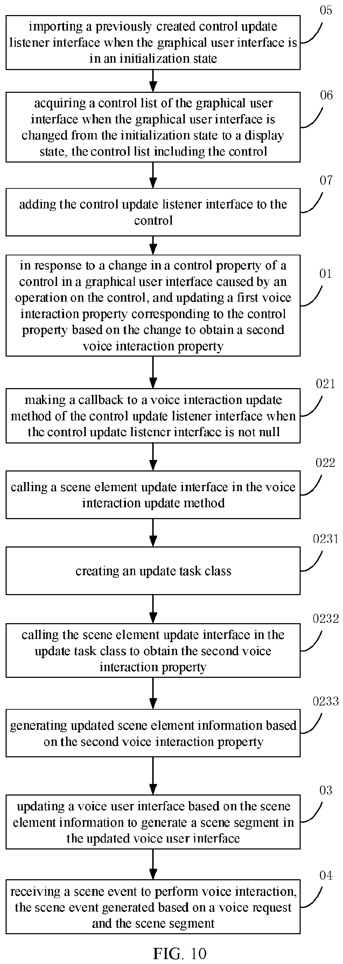

Preferably, referring to FIG. 10, The step 023 includes:
step 0231, creating an update task class;
step 0232, calling the scene element update interface in the update task class to obtain the second voice interaction property; and
step 0233, generating updated scene element information based on the second voice interaction property.

The steps 0231-0233 can be implemented by the first generation module 120. In other words, the first generation module 120 is configured to create an update task class; call the scene element update interface in the update task class to obtain the second voice interaction property; and generate updated scene element information based on the second voice interaction property.

The processor is configured to create an update task class; call the scene element update interface in the update task class to obtain the second voice interaction property; and generate updated scene element information based on the second voice interaction property.

Specifically, an update task class Task can be created in VuiEngine SDK for updating a scene element vuiElement corresponding to a control or control view with a changed property. Also, a preset scene element update interface updateScene is called in the update task class to obtain the second voice interaction property, and the updated voice interaction property can then be obtained by a get method.

Further, a scene segment is generated for the updated voice interaction property, i.e., the second voice interaction property, which is the updated scene element information VuiElement corresponding to the control.

After the updated scene element information corresponding to the control is generated, at step 03, the voice user interface is updated based on the scene element information to generate a scene segment in the updated voice user interface. After the scene element information corresponding to a control with an updated property is generated, an updated scene segment or voice interaction scene of the VUI can be generated based on the scene element information, and the scene segment is cached locally or uploaded to a cloud.

In some embodiments, it may also be determined whether the generated scene segment has been cached in the memory of the application. If so, scene segments can be merged. For example, the same scene elements may have their properties changed, and scene element information for different scene elements may be merged to generate a new scene update segment. If the generated scene segment is not cached in the memory of the application, the scene update segment is generated directly.

In some embodiments, it may also be determined whether it is in the process of voice interaction currently. If it is in the process of voice interaction, the generated scene segment is transmitted to the application via inter-process communication and then uploaded to the cloud server via, for example, an HTTP request. The cloud server may do further processing, such as updating of a scene snapshot.

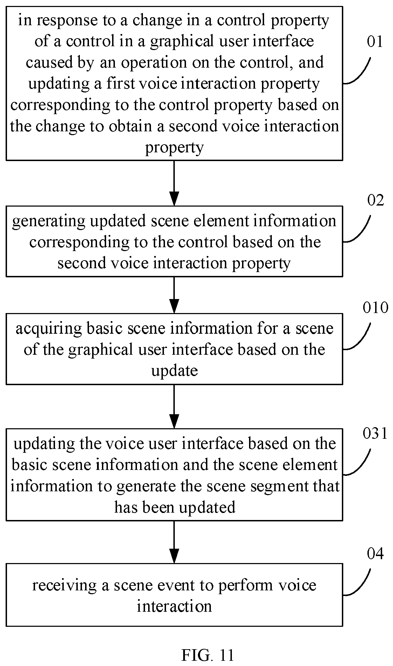

Preferably, referring to FIG. 11, The method of voice interaction further includes:
step 010, acquiring basic scene information for a scene of the graphical user interface based on the update.
Accordingly, the step 03 includes:
step 031, updating the voice user interface based on the basic scene information and the scene element information to generate the scene segment that has been updated.

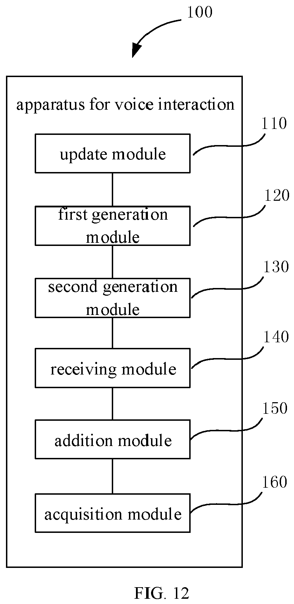

Referring to FIG. 12, The apparatus for voice interaction 100 further comprises an acquisition module 160. The step 010 can be performed by the acquisition module 160. In other words, the acquisition module 160 is configured to acquire basic scene information for a scene of the graphical user interface based on the update. The second generation module 130 is configured to update the voice user interface based on the basic scene information and the scene element information to generate the scene segment that has been updated.

The processor is configured to acquire basic scene information for a scene of the graphical user interface based on the update; and update the voice user interface based on the basic scene information and the scene element information to generate the scene segment that has been updated.

Specifically, a corresponding control is updated based on the property, and the basic scene information of the scene corresponding to the GUI is obtained, which includes information such as the scene ID. An updated scene segment is then generated based on the generated updated scene element information VuiElement. The basic scene information includes scene information such as ID of the scene, VUI version number, and timestamp.

An example of the basic scene information is given below:
"packageName":"com.xiaopeng.car.settings","sceneId":"com.xiaopeng.car.settings-VV1.4.0_202 10412194710_Release-Wifi", "timestamp":1623830168550, "vuiVersion":"2.0".

In this way, by generating the updated scene segment in conjunction with the basic scene information, a correspondence can be quickly established between a VUI scene and the corresponding GUI page. In addition, generating a scene segment instead of generating a complete scene corresponding to the page enables a quick creation of the updated segment, improving the efficiency of updating the scene.

At step 04, a scene event generated based on a voice request and the scene segment is received for voice interaction. A scene event includes a voice interaction event by a user at the current scene. When the user performs voice interaction, a voice request including voice audio is received. A relevant module recognizes and understands the user command, queries a corresponding scene or scene segment in a local cache based on the understood content of the user command, or send the command to a cloud server for query. The local or cloud server returns a corresponding control operation instruction by a relevant processing logic such as querying scene snapshots. VuiEngine SDK performs the corresponding operation according to the operation instruction.

The user can perform a voice interaction operation on a control in the page when the GUI is displayed. The content of the operation includes changing a control property to such as visible, selected, value and other forms. The content of the operation may also include a click on a control. In this case, the current page is jumped to another page through the click control. The content of the control operation can be determined to determine whether the update of the scene element information according to the present invention is to be performed.

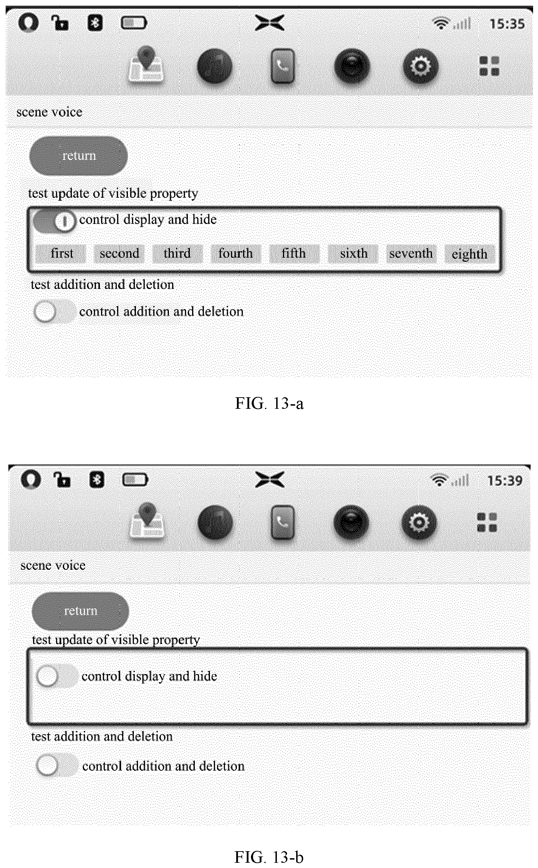

In an example, referring to FIG. 13-a, the current GUI page is a "scene voice" interface, which includes controls such as "return", "control display and hide", and "control addition and deletion". The control "control display and hide" is currently in "ON" state. The user inputs a voice command "turn off the control of display and hidden", and it is determined that the current voice command is to change the property of the control. The present invention updates the property from "ON" to "OFF" through the UI control library, and performs a callback to updateVui of VuiViewChangedListener to generate a scene segment for the new value "OFF" of the property. Referring to FIG. 13-b, the control "control display and hide" is currently in an "OFF" state. Further, when the user inputs a voice command "return", the property of the control will not be changed, but rather a page jump is performed. The page jumps to a page associated with "return" by performing a click operation. After entering this associated page, a corresponding logic can be executed. For example, a determination as to whether build of a VUI scene is needed for this page. If the build of the VUI scene is needed, a VuiViewChangedListener is added for each control corresponding to the scene.

It should be noted that the application in the above-described embodiments is an example of a program carrier in which the GUI is located. The method of voice interaction of the present invention can automatically build a VUI scene segment for a change in a property of a control in the GUI page of the application. The application may also include an applet application. Controls of the applet application can build a VUI scene for a GUI page of the applet in a pre-created UI control library, and a corresponding control update listener interface can be added to the controls of the applet. When the application enters a GUI page of the applet, and the user updates a control property of the applet GUI page through voice interaction, VuiEngine SDK obtains the updated property and generates a scene segment. Applets and other types of programs having GUIs can be viewed as simple alternatives of applications described in the present application.

The present invention further provides a system for voice interaction comprising a vehicle and a server. The vehicle comprises a UI control library created for an application in advance.

The vehicle is configured to, in response to a change in a control property of a control in a graphical user interface corresponding to an operation on the control, update a first voice interaction property corresponding to the control property based on the change to obtain a second voice interaction property; generate updated scene element information corresponding to the control based on the second voice interaction property; update a voice user interface based on the scene element information to generate a scene segment in the updated voice user interface; and in case of a voice request from a user, receive the voice request and transmit the voice request to the server. The server queries a scene snapshot in response to the voice request, generates a scene event when a matching scene snapshot is found, and sends the scene snapshot to the vehicle.

When the scene event is received, the vehicle performs logical processing according to the scene event to perform an operation for responding to the voice request.

the present invention further provides a computer-readable storage medium. The embodiment provides one or more non-transitory computer-readable storage media storing a computer program that, when executed by one or more processors, carries out the method of voice interaction of any of the above embodiments. It will be appreciated by one of ordinary skills in the art that all or part of the processes in the method embodiments described above may be accomplished by instructing relevant software through a computer program. The program may be stored in a non-transitory computer-readable storage medium. The program, when executed, may include a flow of the methods as described above. The storage medium may be a magnetic disk, an optical disk, a read-only memory (ROM), or the like.

In this way, in the invention, when a control property of a control in a graphical user interface is changed in response to an operation on the control, a first voice interaction property corresponding to the control property is updated based on the change to obtain a second voice interaction property. Updated scene element information corresponding to the control is generated based on the second voice interaction property. A voice user interface is updated based on the scene element information to generate a scene segment in the updated voice user interface. Voice interaction is performed when receiving a scene event generated based on a voice request and the scene segment. At least following advantages are achieved.

First, when a control property of a control in the graphical user interface is changed, scene element information of a scene element in the voice user interface can be automatically generated based on the changed property, and voice interaction can be performed by generating a scene segment.

Second, the control update listener interface is automatically added to a control on a GUI page through VuiEngine SDK when a scene is registered or built, and the interface is imported and added to the control in a special state, such that the control update listener interface can be used to listen to property updates of controls. In the case of an update of a property of a control, the control update listener interface can perform a corresponding operation, such as causing a voice user interface (VUI) to perform a corresponding update by means of an update method.

Third, in adding the control update listener interface, the child controls of the controls are traversed. This provides the graphical user interface with a parent-child relation in a 3D space to a certain extent, such that a resulting voice interaction scene has three-dimensional spatial information for voice manipulation. When a voice command specifies the control, the user's desired operation can be effectively identified, thereby improving user experience.

Fourth, there is no need to maintain scene updates at the service end based on changes in the properties and status of controls. In the present invention, when building the scene, a control update listener interface can be automatically added for a control whose properties or status have changed through automatically

Fifth, with the UI control library, voice interaction properties and state changes corresponding to the VUI are encapsulated through the UI control library, such that when updating the scene element information, it is not necessary to determine which property or state of a control has been changed, but it only needs to perform acquisition and generation of new scene element information. The maintenance cost of the service code and the intrusiveness of the code are effectively reduced.

In the description herein, specific features, structures, materials, or characteristics described in connection with terms such as "an embodiment," "some embodiments," "an illustrative embodiment," "an example," "a specific example," or "some examples," etc. are intended to be comprised in at least one embodiment or example of the present invention. In this specification, reference to the above terms do not necessarily refer to the same embodiment or example. Furthermore, the specific features, structures, materials, or characteristics described may be combined in any suitable manner in any one or more embodiments or examples. In addition, a skilled person can appreciate that the various embodiments, examples, and features of the embodiments and examples described herein may be combined with each other, except to the extent that they might be mutually exclusive. Further, references to terms "first", "second" and the like are intended to distinguish same or similar operations. Features following terms such as "first" and "second" may, in some embodiments, have a logical relationship between each other; while in other embodiments they do not necessarily have a logical or sequential relation. The relations between such features should be determined depending on actual embodiments, and should not be determined merely literally.

Any process or method operations in the flowcharts or otherwise described herein may be understood as representing modules, segments, or portions of codes which include one or more executable instructions for implementing specific logical functions or steps of the processes. Moreover, it will be appreciated by those skilled in the art that the scope of the preferred embodiments of the present invention includes additional embodiments, in which functions may be performed out of order from that illustrated or discussed herein, but may instead be performed in substantially the same way or in reverse order depending on the functionality involved.

While embodiments of the present invention have been illustrated and described above, it will be appreciated that the embodiments described above are illustrative and are not to be construed as limiting the present invention. Variations, modifications, substitutions, and alterations of the embodiments described above may be made by one of ordinary skills in the art without departing from the scope of the present invention.

## Claims

1. A method of voice interaction, comprising:
in response to a change in a control property of a control in a graphical user interface corresponding to an operation on the control, updating a first voice interaction property corresponding to the control property based on the change to obtain a second voice interaction property;
generating updated scene element information corresponding to the control based on the second voice interaction property;
updating a voice user interface based on the scene element information to generate a scene segment in the updated voice user interface; and
receiving a scene event to perform voice interaction, the scene event generated based on a voice request and the scene segment.

2. The method of voice interaction of claim 1, wherein the control comprises a GUI control selected from a group of controls including directory controls, Text controls, Edit controls, UpDown controls, Picture controls, Button controls, and Checkbox controls.

3. The method of voice interaction of claim 1 or 2, comprising:
building a voice interaction scene of the graphical user interface when the graphical user interface transitions from an initialization state to a display state.

4. The method of voice interaction of claim 3, further comprising, before responding to the change in the control property of the control in the graphical user interface corresponding to the operation on the control:
importing a previously created control update listener interface when the graphical user interface is in the initialization state;
acquiring a control list of the graphical user interface when the graphical user interface transitions from the initialization state to a display state, the control list including the control; and
adding the control update listener interface to the control.

5. The method of voice interaction of claim 4, wherein said adding the control update listener interface to the control comprises:
adding the control update listener interface to the control when the control is a voice interaction control.

6. The method of voice interaction of claim 5, wherein said adding the control update listener interface to the control further comprises:
adding the control update listener interface to the control when scene element information of a previously built scene corresponding to the control is valid.

7. The method of voice interaction of claim 4, further comprising, before responding to the change in the control property of the control in the graphical user interface corresponding to the operation on the control:
obtaining the child control of the control when the control includes a child control; and
adding the control update listener interface to the child control.

8. The method of voice interaction of claim 4, wherein said generating updated scene element information corresponding to the control based on the second voice interaction property comprises:
performing a callback to a voice interaction update method of the control update listener interface when the control update listener interface is not null;
calling a scene element update interface in the voice interaction update method; and
acquiring the second voice interaction property via the scene element update interface and generating the updated scene element information based on the second voice interaction property.

9. The method of voice interaction of claim 8, wherein said acquiring the second voice interaction property via the scene element update interface and generating the updated scene element information based on the second voice interaction property comprises:
creating an update task class;
calling the scene element update interface in the update task class to obtain the second voice interaction property; and
generating the updated scene element information based on the second voice interaction property.

10. The method of voice interaction of claim 1, further comprising:
acquiring basic scene information for a scene of the graphical user interface based on the updated scene element information, and
updating a voice user interface based on the scene element information to generate a scene segment in the updated voice user interface comprises:
updating the voice user interface based on the basic scene information and the scene element information to generate the scene segment that has been updated.

11. An apparatus for automatically updating a voice interaction scene, **characterized by**:
an update module configured to, when a voice request comprises an update request for updating a control property of a control in a graphical user interface, update a first voice interaction property corresponding to the control property based on the update request and according to a first predetermined policy to obtain a second voice interaction property;
a first generation module configured to generate updated scene element information based on the second voice interaction property;
a second generation module configured to generate an updated voice interaction scene based on the updated scene element information to update the voice interaction scene corresponding to the graphical user interface; and
a receiving module configured to receive a scene event and to perform voice interaction, the scene event generated based on the voice request and the voice interaction scene.

12. A system for voice interaction comprising a vehicle and a server, **characterized in that**:
the vehicle is configured to, in response to a change in a control property of a control in a graphical user interface corresponding to an operation on the control, update a first voice interaction property corresponding to the control property based on the change to obtain a second voice interaction property, generate updated scene element information corresponding to the control based on the second voice interaction property, and update a voice user interface based on the scene element information to generate a scene segment in the updated voice user interface, and receive a voice request and transmit the voice request to the server;
the server is configured to generate a scene event in response to the voice request and send the scene event to the vehicle; and
the vehicle is further configured to receive a scene event and to perform voice interaction, the scene event generated based on a voice request and the scene segment.

13. A vehicle comprising a memory and a processor, the memory having stored thereon a computer program which, when executed by the processor, implements the method of voice interaction of any one of claims 1-10.

14. A non-transitory computer-readable storage medium for a computer program, the computer program, when executed by one or more processors, implementing the method of voice interaction of any one of claims 1-10.
